# FASCICULE DE BREVET EUROPEEN

(11) **EP 3 499 625 B1**
(45) Date de publication et mention de la délivrance du brevet: **15.04.2020**
(21) Numéro de dépôt: 18210899.3
(22) Date de dépôt: 06.12.2018
(51) Int. Cl.: H01M 8/241, H01M 8/2457, H01M 8/247, H01M 8/2483, H01M 8/0271, H01M 8/0258, H01M 8/04089, H01M 8/0276, H01M 8/2455

(54) **SYSTÈME INCLUANT UNE PILE À COMBUSTIBLE À MEMBRANE ÉCHANGEUSE DE PROTONS LIMITANT LES FUITES DE CARBURANT**
BRENNSTOFFZELLENSYSTEM MIT POLYMERELEKTROLYTMEMBRAN UND VERRINGERTER BRENNGAS-LECKAGE
PEM FUEL CELL SYSTEM HAVING REDUCED FUEL GAZ LEAKAGE

(30) Priorité: 13.12.2017 FR 1762071
(43) Date de publication de la demande: 19.06.2019
(73) Titulaire: Commissariat à l'Énergie Atomique et aux Énergies Alternatives, 75015 Paris (FR)
(72) Inventeur: POIROT-CROUVEZIER, Jean-Philippe, 38450 SAINT-GEORGES DE COMMIERS (FR); ROSINI, Sébastien, 38100 GRENOBLE (FR)
(74) Mandataire: Guérin, Jean-Philippe

(56) Documents cités:
- US-A1- 2005 079 400
- US-A1- 2006 110 651
- US-A1- 2008 176 136

## Description

L'invention concerne les piles à combustible à membrane échangeuse de protons, pour la production d'électricité.

Les piles à combustible à membrane échangeuse de protons sont utilisées à une température de fonctionnement inférieure à 300°C. La membrane échangeuse de protons forme un électrolyte solide. Pour des applications basse température, on utilise généralement des membranes de type perfluorosulfoné ou de type polybenzimidazole chargé en acide phosphorique.

En particulier, une pile à combustible inclut usuellement un empilement de cellules élémentaires dans lesquelles a lieu une réaction électrochimique entre deux réactifs qui sont introduits de manière continue. Le combustible est apporté au contact de l'anode, le comburant est amené au contact de la cathode.

La réaction est subdivisée en deux demi-réactions, qui ont lieu d'une part à l'interface anode/membrane et d'autre part à l'interface cathode/membrane. Les demi-réactions ne peuvent avoir lieu que s'il existe un conducteur ionique entre les deux électrodes et un conducteur électronique.

Les fluides sont amenés au contact des zones réactionnelles à partir de collecteurs d'entrée et de sortie qui traversent généralement l'empilement de part en part. Les fluides sont généralement guidés entre un collecteur et leur zone réactionnelle par des canaux d'écoulement d'une plaque bipolaire, ayant également une fonction de conduction électrique et une fonction de transmission d'un effort de serrage de l'empilement de cellules. Chaque collecteur est entouré d'un joint évitant le mélange des différents fluides circulant dans la pile à combustible. Chaque cellule dispose de moyens d'injection au travers des joints pour amener le fluide concerné, du collecteur vers la zone réactionnelle.

Un joint périphérique est disposé à la périphérie de chaque plaque bipolaire et ceinture ainsi une partie médiane de la pile incluant la zone réactionnelle et les collecteurs d'écoulement. Ce joint périphérique assure l'étanchéité des différents circuits d'écoulement entre eux et vis-à-vis de l'extérieur.

Les différents joints ne garantissent pas une étanchéité parfaite. En particulier, une faible quantité de carburant a tendance à s'échapper de la pile à combustible. Ainsi, une petite concentration de carburant reste présente dans l'environnement proche de la pile à combustible. Lorsque le carburant est du dihydrogène, ces fuites sont d'autant plus facilitées que le dihydrogène présente une viscosité réduite. Pour limiter les risques liés à la présence de combustible, et en particulier de dihydrogène, à proximité de la pile à combustible, on adjoint le plus souvent un dispositif de ventilation à celle-ci. Cependant, dans certaines applications de la pile à combustible, celle-ci peut être confinée ou le dispositif de ventilation peut s'avérer trop coûteux ou incompatible techniquement.

Pour détecter et confiner une fuite, une conception de pile à combustible est décrite dans le document JP2006179364 et propose de former un joint de zone réactive, à proximité immédiate de la zone réactive de la pile à combustible. Le joint de zone réactive est ceinturé par le joint périphérique. Une zone intermédiaire est ménagée entre le joint périphérique et le joint de zone réactive. Des collecteurs opposés sont ménagés dans la zone intermédiaire. Chaque collecteur inclut une sonde de détection d'un fluide provenant d'une fuite. La pile à combustible est positionnée avec une sonde plus haute que l'autre : du dihydrogène sera détecté par la sonde positionnée dans le collecteur en position la plus haute, du liquide de refroidissement étant détecté par la sonde positionnée dans le collecteur en position la plus basse. Notamment du fait de ses contraintes de positionnement, une telle pile à combustible n'est utilisable que dans un contexte expérimental, pour des tests.

Le document US2006110651 décrit une structure dans laquelle un circuit d'écoulement est ménagé en périphérie d'une zone réactive anodique. Ce circuit d'écoulement périphérique est relié aux collecteurs d'entrée et de sortie de comburant et est donc traversé par un écoulement en dérivation de la zone réactive cathodique.

Une telle structure ne permet ni d'alimenter ce circuit d'écoulement périphérique par un fluide différent de ceux alimentant les zones réactives, ni de récupérer aisément un fluide pour réaliser une analyse de la teneur des fuites.

L'invention vise à résoudre un ou plusieurs de ces inconvénients. L'invention porte ainsi sur une pile à combustible, telle que définie dans les revendications annexées.

L'invention porte également sur les variantes des revendications dépendantes. L'homme du métier comprendra que chacune des caractéristiques des variantes des revendications dépendantes ou de la description peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple d'empilement d'assemblages membrane/électrodes et de plaques bipolaires pour une pile à combustible;
- la figure 2 est une vue d'une face anodique d'une plaque bipolaire d'une pile à combustible selon un premier mode de réalisation de l'invention, munie de joints d'étanchéité ;
- la figure 3 est une vue d'une face anodique d'une plaque bipolaire d'une pile à combustible selon un deuxième mode de réalisation de l'invention, munie de joints d'étanchéité ;
- les figures 4 à 6 illustrent schématiquement différentes configurations de circuits d'écoulement pour des piles à combustible selon l'invention ;
- la figure 7 est une vue en coupe schématique d'un exemple de pile à combustible selon l'invention ;
- la figure 8 est une vue d'une face anodique d'une variante de la pile à combustible du premier mode de réalisation ;
- la figure 9 est une vue d'une face anodique d'une autre variante de la pile à combustible du premier mode de réalisation ;
- les figures 10 à 15 sont des vues en coupe de différentes variantes de piles à combustible au niveau de zones intermédiaires.

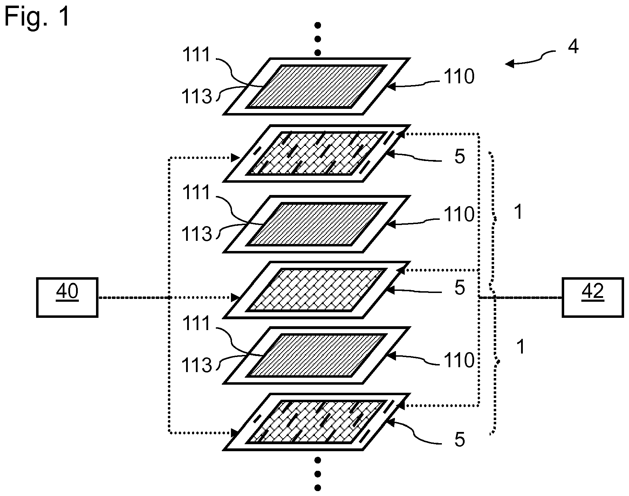

La figure 1 est une vue en perspective éclatée schématique d'un empilement de cellules 1 d'une pile à combustible 4. La verticale définira la direction selon laquelle l'empilement de cellules 1 est réalisé. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Une ou plusieurs cellules 1 présentent également un circuit de refroidissement de la zone réactive.

Chaque cellule 1 comprend un assemblage membrane/électrodes 110 ou AME 110. Un assemblage membrane/électrodes 110 comprend un électrolyte solide 113, une cathode (non illustrée) et une anode 111 placées de part et d'autre de l'électrolyte et fixées sur cet électrolyte 113. La couche d'électrolyte 113 forme une membrane permettant une conduction protonique tout en étant imperméable aux gaz présents dans la cellule. La couche d'électrolyte empêche également un passage des électrons entre l'anode 111 et la cathode. L'électrolyte 113 peut par exemple être constitué de membrane perfluorosulfonée, de polybenzimidazole (PBI) dopé avec de l'acide phosphorique ou un ionomère conducteur protonique quelconque.

Entre chaque couple d'AME adjacents, une plaque bipolaire 5 est disposée. Sur chaque face d'une AME, une plaque bipolaire 5 forme un guide d'écoulement de réactif. Chaque plaque bipolaire 5 définit ici des canaux d'écoulement anodiques et des canaux d'écoulement cathodiques sur des faces externes opposées. Des plaques bipolaires 5 définissent également avantageusement des canaux d'écoulement de fluide de refroidissement entre deux assemblages membrane/électrodes successifs. Les plaques bipolaires 5 peuvent être formées chacune de façon connue en soi à partir de deux tôles métalliques conductrices assemblées, par exemple en acier inoxydable, ou en alliage de titane, en alliage d'aluminium, en alliage de nickel ou en alliage de tantale. Chaque tôle définit alors une face externe respective. Les plaques bipolaires 5 peuvent également être obtenues par tout autre procédé, par exemple le moulage ou l'injection à partir de composites carbone-polymère. Les plaques bipolaires 5 peuvent ainsi également être formées d'un seul tenant. Les faces externes de la plaque bipolaire 5 sont alors définies par une telle pièce d'un seul tenant. Chaque assemblage membrane/électrodes 110 peut en outre comprendre une couche de diffusion de gaz (non illustrée) disposée entre l'anode et une plaque bipolaire, et une autre couche de diffusion de gaz disposée entre la cathode et une autre plaque bipolaire. Les assemblages membrane/électrodes 110 peuvent comporter des renforts, non illustrés ici.

De façon connue en soi, durant le fonctionnement de la pile à combustible 4, de l'air s'écoule entre un AME 110 et une plaque bipolaire 5, et du dihydrogène s'écoule entre cet AME 110 et une autre plaque bipolaire 5. Les plaques bipolaires 5 ont notamment une fonction de guidage d'écoulement des réactifs de part et d'autre de l'AME 110. Au niveau de l'anode, le dihydrogène est ionisé pour produire des protons qui traversent l'AME 110. Les électrons produits par cette réaction sont collectés par une plaque bipolaire 5. Les électrons produits sont ensuite appliqués sur une charge électrique connectée à la pile à combustible 4 pour former un courant électrique. Au niveau de la cathode, de l'oxygène est réduit et réagit avec les protons pour former de l'eau. Les réactions au niveau de l'anode et de la cathode sont régies comme suit :

2*H*₂ → 4*H*⁺ + 4*e*⁻

au niveau de l'anode ;

4*H*⁺ + 4*e*⁻ + *O*₂ → 2*H*₂*O*

au niveau de la cathode.

Durant son fonctionnement, une cellule 1 de la pile à combustible 4 génère usuellement une tension continue entre l'anode et la cathode de l'ordre de 1V.

La source de comburant 42 comprend typiquement un compresseur pour introduire un flux d'air à une pression donnée à l'entrée des cellules 1. Un tel compresseur reçoit par exemple une consigne de pression d'air ou une consigne de débit, la pression d'air ou le débit pouvant être régulés par une vitesse de rotation variable du compresseur.

L'empilement des plaques bipolaires 5 et des assemblages membrane/électrodes 110 est destiné à former une pluralité de collecteurs d'écoulement. À cet effet, des orifices respectifs sont ménagés à travers les plaques bipolaires 5 et à travers les assemblages membrane/électrodes 110. Les orifices des plaques bipolaires 5 et des assemblages membrane/électrodes 110 sont disposés en vis-à-vis afin de former les différents collecteurs d'écoulement.

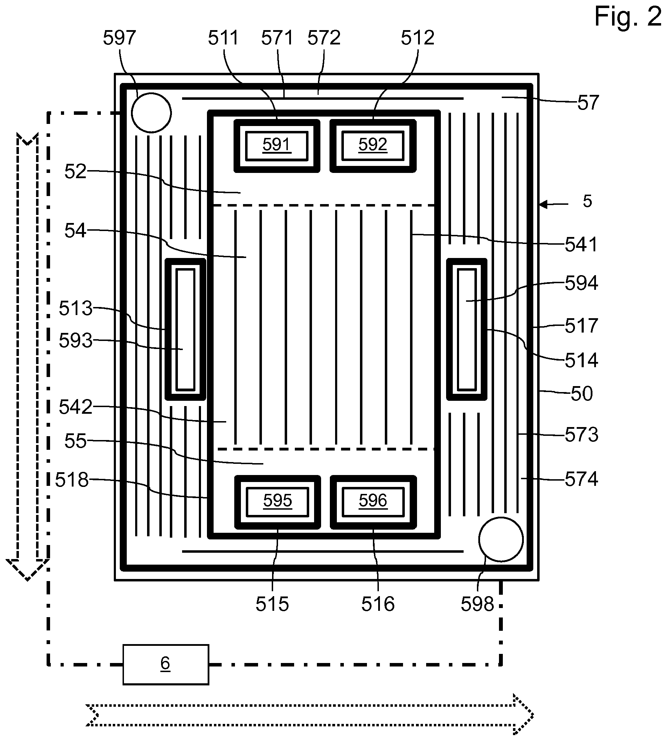

La figure 2 est une vue d'une face anodique d'une plaque bipolaire 5 d'une pile à combustible 4 selon un premier mode de réalisation de l'invention, munie de joints d'étanchéité décrits par la suite. La pile à combustible 4 comprend une AME 110 disposée en vis-à-vis de la plaque bipolaire 5, et non illustrée sur cette figure. Les joints sont plaqués contre l'AME 110. La figure 2 illustre une face externe de la plaque bipolaire 5, destinée à guider du carburant dans une zone réactive 54 positionnée dans sa partie médiane. Du carburant est ainsi guidé dans la zone réactive 54 entre la plaque bipolaire 5 et l'AME 110.

La plaque bipolaire 5 comporte des orifices ou collecteurs 591 et 592 au niveau d'une première extrémité longitudinale, et des orifices 595 et 596 au niveau d'une deuxième extrémité longitudinale. La plaque bipolaire 5 comporte un orifice 593 sur un premier côté et un orifice 594 sur un second côté de la zone réactive. Les orifices 593 et 594 sont positionnés sensiblement à mi distance des orifices 591 et 596. Les orifices 591 à 596 sont ceinturés par des joints 511 à 516 respectivement.

L'orifice 591 sert par exemple pour former un collecteur d'alimentation en carburant, l'orifice 596 sert par exemple pour former un collecteur d'évacuation de résidus de combustion et de carburant non utilisé. L'orifice 593 sert par exemple pour former un collecteur d'alimentation en fluide de refroidissement pour la zone réactive 54, l'orifice 594 sert par exemple pour former un collecteur d'évacuation de ce fluide de refroidissement. L'orifice 592 sert par exemple pour former un collecteur d'alimentation en comburant, et l'orifice 595 sert par exemple pour former un collecteur d'évacuation d'eau produite et de comburant non utilisé. La direction d'écoulement du fluide de refroidissement est ici illustrée de façon schématique par la flèche en pointillés. La direction d'écoulement des réactifs est ici illustrée de façon schématique par la flèche en trait discontinu. L'écoulement de fluide de refroidissement est ainsi sensiblement perpendiculaire à l'écoulement des réactifs.

La plaque bipolaire 5 est ici formée de deux tôles solidarisées l'une à l'autre, la figure 2 illustrant une face externe d'une tôle 50. En vue de guider le carburant dans la zone réactive 54, la plaque bipolaire 5 comporte ici des canaux d'écoulement 542, délimités par des parois 541. Des zones d'homogénéisation de carburant 52 et 55 sont avantageusement ménagées de part et d'autre de la zone réactive 54. Les zones d'homogénéisation 52 et 55 mettent en communication le collecteur 591 avec les canaux d'écoulement 542 et le collecteur 596 avec les canaux d'écoulement 542 respectivement, de façon connue en soi.

Un joint intermédiaire 518 ceinture la zone réactive 54, les zones d'homogénéisation 52 et 55, et les collecteurs 591, 592, 595 et 596. L'écoulement du carburant entre les collecteurs 591 et 596 est ainsi normalement confiné par le joint 518.

Un joint périphérique 517 ceinture l'ensemble des orifices ou collecteurs 591 à 596 et le joint intermédiaire 518. Une zone intermédiaire 57 est ainsi ménagée entre les joints 517 et 518. Les collecteurs 593 et 594 sont ici ménagés dans la zone intermédiaire 57.

Des collecteurs d'écoulement 597 et 598 sont également ménagés dans la zone intermédiaire 57. Le collecteur 597 est destiné à introduire un fluide dans la zone intermédiaire 57, le collecteur 598 étant destiné à évacuer ce fluide. Pour passer du collecteur 597 au collecteur 598, le fluide doit parcourir un circuit d'écoulement ménagé dans la zone intermédiaire 57. Ce circuit d'écoulement longe notamment le joint intermédiaire 518, afin de pouvoir récupérer du carburant ayant traversé la ligne du joint 518. La pile à combustible 4 comporte en outre une pompe 6 configurée pour entraîner un fluide entre le collecteur 597 et le collecteur 598 à travers le circuit d'écoulement de la zone intermédiaire 57. Les collecteurs 597 et 598 peuvent être entourés ou non de joints. Selon l'invention, l'un au moins des collecteurs 597 et 598 est séparé des collecteurs 591, 592, 595 et 596 par le joint 518, afin de pouvoir soit alimenter la zone intermédiaire 57 par le collecteur 597 avec un fluide différent de celui alimentant les zones réactives, soit pouvoir analyser aisément le contenu du fluide provenant de la zone intermédiaire 57 et récupéré dans le collecteur 598. Dans l'exemple illustré, les collecteurs 597 et 598 sont tous deux séparés des collecteurs 591, 592, 595 et 596 par le joint 518.

Dans l'exemple illustré, la plaque bipolaire 5 présente sensiblement une forme rectangulaire. Les joints 517 et 518 présentent ici également une forme rectangulaire pour détailler une configuration simplifiée de l'invention.

Dans cette configuration, les collecteurs 597 et 598 sont positionnés dans des coins opposés de la zone intermédiaire 57. Le circuit d'écoulement entre les collecteurs 597 et 598 ceinture ici toute la circonférence du joint 518, le fluide s'écoulant dans le circuit d'écoulement pouvant ainsi récupérer du carburant, quel que soit l'emplacement de la fuite. Le circuit d'écoulement comporte ici des canaux d'écoulement 572 délimités par des parois 571 s'étendant dans le sens de la largeur de la plaque bipolaire 5. Le circuit d'écoulement comporte également des canaux d'écoulement 574 délimités par des parois 573 s'étendant dans le sens de la longueur de la plaque bipolaire 5. Les canaux d'écoulement 572 et 574 permettent de favoriser un écoulement de fluide dans toute la zone intermédiaire 57, afin d'éviter que du carburant ayant fui ne s'accumule dans des zones de cette zone intermédiaire 57.

Le fluide circulant entre les collecteurs 597 et 598 est ainsi à même d'entraîner du carburant ayant pu fuir de la zone réactive 54, afin d'éviter sa concentration à proximité de la pile à combustible 4. Pour entraîner du carburant, on pourra envisager de faire circuler un fluide tel que de l'air, un gaz neutre ou un liquide. En particulier pour de l'air, on choisira un débit d'air garantissant la non explosivité du mélange, soit une concentration en hydrogène inférieure à 4%. L'utilisation de liquide de refroidissement circulant entre les collecteurs 597 et 598 permet de limiter les risques d'inflammation lors de la récupération d'une fuite de carburant.

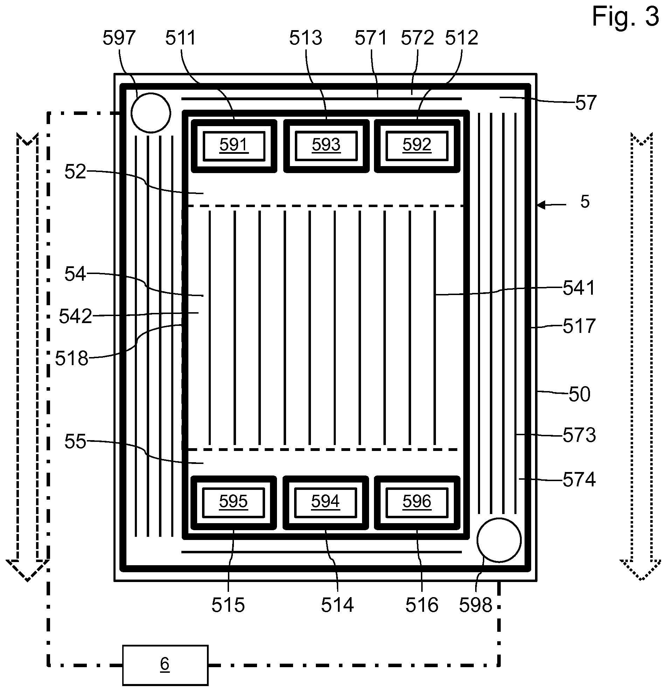

La figure 3 est une vue d'une face anodique d'une plaque bipolaire 5 d'une pile à combustible 4 selon un deuxième mode de réalisation de l'invention, munie de joints d'étanchéité décrits par la suite. La pile à combustible 4 comprend une AME 110 disposée en vis-à-vis de la plaque bipolaire 5, et non illustrée sur cette figure. Les joints sont plaqués contre l'AME 110. La figure 3 illustre une face externe de la plaque bipolaire 5, destinée à guider du carburant dans une zone réactive 54 positionnée dans sa partie médiane. Du carburant est ainsi guidé dans la zone réactive 54 entre la plaque bipolaire 5 et l'AME 110.

La plaque bipolaire 5 comporte des orifices 591 à 593 au niveau d'une première extrémité longitudinale, et des orifices 594 à 596 au niveau d'une deuxième extrémité longitudinale. Les orifices 591 à 596 sont ceinturés par des joints 511 à 516 respectivement. Les orifices 591 à 596 présentent les mêmes fonctions que pour le premier mode de réalisation. La direction d'écoulement du liquide de refroidissement est ici illustrée de façon schématique par la flèche en pointillés. La direction d'écoulement des réactifs est ici illustrée de façon schématique par la flèche en trait discontinu. L'écoulement de liquide de refroidissement est ainsi sensiblement parallèle à l'écoulement des réactifs.

La plaque bipolaire 5 est ici formée de deux tôles solidarisées l'une à l'autre, la figure 2 illustrant une face externe d'une tôle 50. En vue de guider le carburant dans la zone réactive 54, la plaque bipolaire 5 comporte ici des canaux d'écoulement 542, délimités par des parois 541. Des zones d'homogénéisation de carburant 52 et 55 sont avantageusement ménagées de part et d'autre de la zone réactive 54. Les zones d'homogénéisation 52 et 55 mettent en communication le collecteur 591 avec les canaux d'écoulement 542 et le collecteur 596 avec les canaux d'écoulement 542 respectivement, de façon connue en soi.

Un joint intermédiaire 518 ceinture la zone réactive 54, les zones d'homogénéisation 52 et 55, et les collecteurs 591 à 596. L'écoulement du carburant entre les collecteurs 591 et 596 est ainsi normalement confiné par le joint 518. Un joint périphérique 517 ceinture le joint intermédiaire 518. Une zone intermédiaire 57 est ainsi ménagée entre les joints 517 et 518.

Des collecteurs d'écoulement 597 et 598 sont ménagés dans la zone intermédiaire 57. Le collecteur 597 est destiné à introduire un fluide dans la zone intermédiaire 57, le collecteur 598 étant destiné à évacuer ce fluide. Pour passer du collecteur 597 au collecteur 598, le fluide doit parcourir un circuit d'écoulement ménagé dans la zone intermédiaire 57. Ce circuit d'écoulement longe notamment le joint intermédiaire 518, afin de pouvoir récupérer du carburant ayant traversé la ligne du joint 518. La pile à combustible 4 comporte en outre une pompe 6 configurée pour entraîner un fluide entre le collecteur 597 et le collecteur 598 à travers le circuit d'écoulement de la zone intermédiaire 57. Les collecteurs 597 et 598 peuvent être entourés ou non de joints.

Dans l'exemple illustré, la plaque bipolaire 5 présente sensiblement une forme rectangulaire. Les joints 517 et 518 présentent ici également une forme rectangulaire pour détailler une configuration simplifiée de l'invention.

Dans cette configuration, les collecteurs 597 et 598 sont positionnés dans des coins opposés de la zone intermédiaire 57. Le circuit d'écoulement entre les collecteurs 597 et 598 ceinture ici toute la circonférence du joint 518, le fluide s'écoulant dans le circuit d'écoulement pouvant ainsi récupérer du carburant, quel que soit l'emplacement de la fuite. Le circuit d'écoulement comporte ici des canaux d'écoulement 572 délimités par des parois 571 s'étendant dans le sens de la largeur de la plaque bipolaire 5. Le circuit d'écoulement comporte également des canaux d'écoulement 574 délimités par des parois 573 s'étendant dans le sens de la longueur de la plaque bipolaire 5. Les canaux d'écoulement 572 et 574 permettent de favoriser un écoulement de fluide dans toute la zone intermédiaire 57, afin d'éviter que du carburant ayant fui ne s'accumule dans des zones de cette zone intermédiaire 57.

Le fluide circulant entre les collecteurs 597 et 598 est ainsi à même d'entraîner du carburant ayant pu fuir de la zone réactive 54, afin d'éviter sa concentration à proximité de la pile à combustible 4. Pour entraîner du carburant, on pourra envisager de faire circuler un fluide tel que de l'air, un gaz neutre ou un liquide.

Le fluide circulant dans la zone intermédiaire 57 pour les différents modes de réalisation peut soit être un fluide dédié isolé des autres fluides de la pile à combustible 4 (réactifs et fluides de refroidissement), soit être relié à un circuit de circulation d'un autre fluide. Par exemple, on peut envisager que le fluide circulant dans la zone intermédiaire 57 soit du fluide de refroidissement circulant également à la verticale de la zone réactive 54. On peut également envisager que le fluide circulant dans la zone intermédiaire 57 soit du comburant, par exemple de l'air circulant au niveau d'une face cathodique.

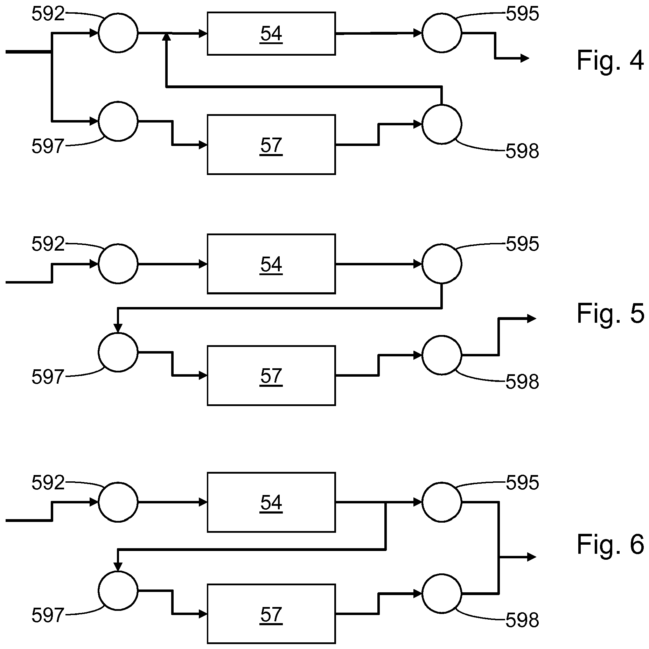

Les figures 4 à 6 illustrent schématiquement différentes configurations de circuits d'écoulement dans la zone intermédiaire 57, connectés à un autre circuit d'écoulement de fluide passant par les plaques bipolaires 5 à la verticale de la zone réactive 54.

Dans la configuration de la figure 4, une sortie de la pompe 6 est connectée d'une part au collecteur 592, et d'autre part au collecteur 597. Le collecteur 598 est connecté en aval du collecteur 592, entre le collecteur 592 et la zone réactive 54. Une analyse du contenu du fluide traversant la zone intermédiaire 57 peut être réalisée au niveau du collecteur 598. L'entrée de la pompe 6 est connectée au collecteur 595. De l'air est ainsi prélevé avant d'entrer dans la zone réactive 54, pour être introduit dans la zone intermédiaire 57, puis être réintroduit en amont de cette zone réactive 54.

Dans la configuration de la figure 5, une sortie de la pompe 6 est connectée au collecteur 592. Le collecteur 595 est connecté au collecteur 597. Le collecteur 598 est connecté à l'entrée de la pompe 6. De l'air est ainsi prélevé à la sortie de la zone réactive 54 pour traverser la zone intermédiaire 57. Le fluide traversant la zone intermédiaire 57 est donc différent de celui qui alimente les zones réactives anodique et cathodique.

Dans la configuration de la figure 6, une sortie de la pompe 6 est connectée au collecteur 592. Le collecteur 597 est connecté en amont du collecteur 595, entre la zone réactive 54 et le collecteur 595. Le fluide traversant la zone intermédiaire 57 est donc différent de celui qui alimente les zones réactives anodique et cathodique. L'entrée de la pompe 6 est connectée d'une part au collecteur 595 et d'autre part au collecteur 598.

L'air introduit dans le collecteur 597 peut au préalable traverser un humidificateur ou un séparateur de phase.

On peut également envisager une configuration similaire de ces différentes variantes avec un circuit de fluide de refroidissement à la place de l'air, en remplaçant le collecteur 592 par le collecteur 593, et en remplaçant le collecteur 595 par le collecteur 594.

Les configurations des figures 5 et 6 s'avèrent particulièrement avantageuses avec de l'air utilisé comme fluide dans les circuits d'écoulement de la zone intermédiaire 57, puisque l'air prélevé à la sortie de la zone réactive 54 comporte une faible proportion en oxygène et limite ainsi les risques de combustion en cas de fuite de dihydrogène. Il s'avère ainsi avantageux de pouvoir faire circuler un fluide différent de celui de l'alimentation en comburant de la zone réactive cathodique, puisqu'appauvri en oxygène.

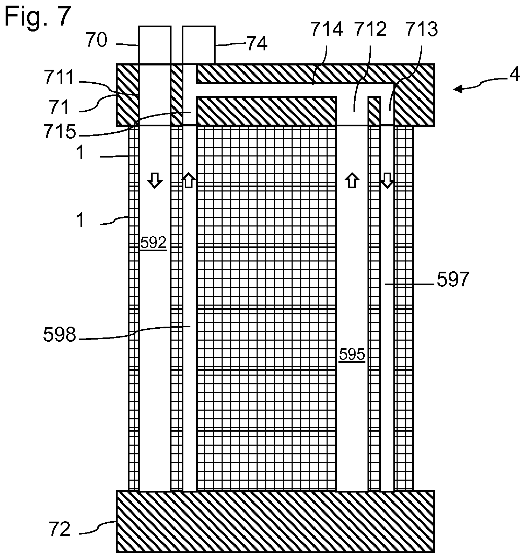

La figure 7 est une vue en coupe schématique d'un exemple de pile à combustible 4 selon l'invention. L'empilement de cellules 1 est ici traversé par un collecteur 592 pour l'alimentation de carburant, est traversé par un collecteur 595 pour la sortie des résidus de combustion. L'empilement de cellules 1 est ici traversé par des collecteurs 597 et 598. La pile 4 comporte en outre des plaques de serrage 71 et 72, disposées de part et d'autre de l'empilement. Les plaques de serrage 71 et 72 sont utilisées de façon connue en soi pour appliquer un effort de compression sur l'empilement, selon la direction de cet empilement. Les plaques de serrage 71 et 72 comportent en outre des canalisations destinées à obtenir la configuration d'écoulement illustrée en référence à la figure 6.

La plaque de serrage 71 comporte :
- un alésage traversant 711. L'alésage traversant 711 met en communication une entrée d'alimentation en carburant 70 avec le collecteur 592 ;
- un alésage traversant 715. L'alésage traversant 715 met en communication une sortie 74 de résidus de combustion avec le collecteur 598 ;
- un alésage 712 en communication avec le collecteur 595 ;
- un alésage 713 en communication avec le collecteur 597. L'alésage 713 est relié à l'alésage 712, de sorte que les résidus de combustion provenant du collecteur 595 peuvent être introduits dans le collecteur 597 ;
- un alésage 714 mettant en communication l'alésage 712 et l'alésage 715. L'alésage 714 est destiné à former une perte de charge entre les alésages 712 715, pour favoriser un écoulement de l'alésage 712 vers l'alésage 713. Une perte de charge est par exemple obtenue en réalisant une chicane à l'intérieur de l'alésage 714. La valeur de cette perte de charge doit permettre à une fraction de l'écoulement sortant du collecteur 595 de circuler dans les zones intermédiaires 57 de chaque cellule, tandis que le reste du flux sortant du collecteur 595 s'écoule vers la sortie 75 au travers des alésages 714 et 715. Dans cet exemple, le fluide parcourant les collecteurs 597 et 598 est différent du fluide alimentant le collecteur 592, puisque le fluide parcourant les 597 et 598 a traversé au préalable la zone réactive anodique.

Les canalisations 711 à 715 peuvent être réalisées de façon connue en soi par usinage ou moulage de la plaque de serrage 71.

La pile 4 est ici illustrée en coupe à travers un empilement de cellules électrochimiques 1. Dans un souci de simplification de l'illustration de certains circuits d'écoulement, le collecteur d'écoulement 592 est ici illustré à la périphérie de la pile 4, alors qu'il est en réalité disposé dans sa zone médiane.

On peut également envisager de réaliser les connexions des différents collecteurs au niveau d'une culasse commune à plusieurs empilements.

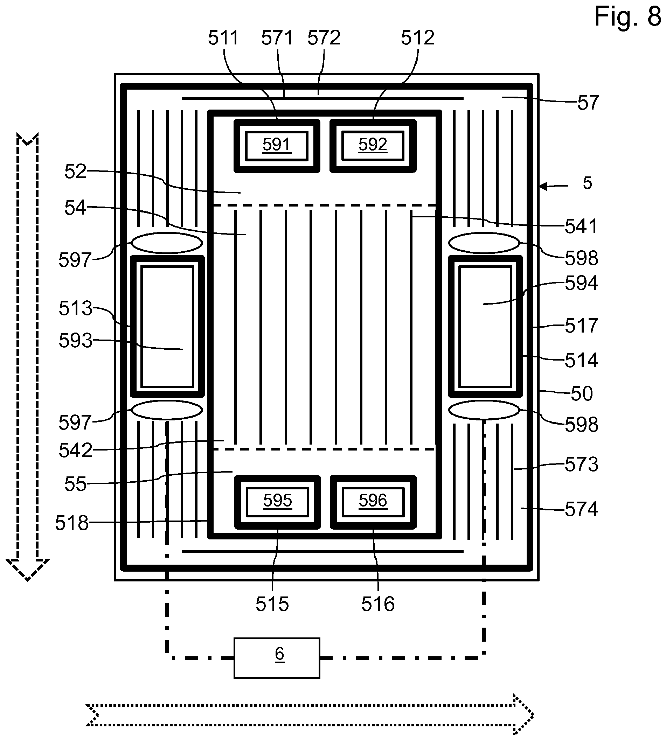

La figure 8 est une vue d'une face anodique d'une variante de la pile à combustible du premier mode de réalisation, munie de joints décrits par la suite. La pile à combustible 4 comprend une AME 110 disposée en vis-à-vis de la plaque bipolaire 5, et non illustrée sur cette figure. Les joints sont plaqués contre l'AME 110. La figure 8 illustre une face externe de la plaque bipolaire 5, destinée à guider du carburant dans une zone réactive 54 positionnée dans sa partie médiane. Du carburant est ainsi guidé dans la zone réactive 54 entre la plaque bipolaire 5 et l'AME 110, par l'intermédiaire de canaux d'écoulement 542 délimités par des parois 541. Des zones d'homogénéisation de carburant 52 et 55 sont avantageusement ménagées de part et d'autre de la zone réactive 54.

La plaque bipolaire 5 comporte des orifices ou collecteurs 591 à 596 présentant le même positionnement et la même fonction que dans l'exemple de la figure 2. Les orifices 591 à 596 sont ceinturés par des joints 511 à 516 respectivement. Les zones d'homogénéisation 52 et 55 mettent en communication le collecteur 591 avec les canaux d'écoulement 542 et le collecteur 596 avec les canaux d'écoulement 542 respectivement, de façon connue en soi.

Un joint intermédiaire 518 et un joint périphérique 517 présentent sensiblement la même configuration que dans l'exemple de la figure 2. Une zone intermédiaire 57 est ainsi délimitée entre les joints 517 et 518.

Dans cette variante, on ménage plusieurs circuits d'écoulement dissociés dans la zone intermédiaire 57. À cet effet, la pile à combustible 4 comporte deux collecteurs 597, positionnés de part et d'autre du collecteur 593. La pile à combustible 4 comporte également deux collecteurs 598 positionnés de part et d'autre du collecteur 594. Un premier circuit d'écoulement contourne ainsi les collecteurs 591 et 592 pour relier un collecteur 597 et un collecteur 598. Un deuxième circuit d'écoulement contourne les collecteurs 595 et 596 pour relier un autre collecteur 597 et un autre collecteur 598. Les premier et deuxième circuits d'écoulement comportent ici des canaux d'écoulement 572 délimités par des parois 571 s'étendant dans le sens de la largeur de la plaque bipolaire 5. Les premier et deuxième circuits d'écoulement comportent également des canaux d'écoulement 574 délimités par des parois 573 s'étendant dans le sens de la longueur de la plaque bipolaire 5. Les canaux d'écoulement 572 et 574 permettent de favoriser un écoulement de fluide dans toute la zone intermédiaire 57, afin d'éviter que du carburant ayant fui ne s'accumule dans des zones de cette zone intermédiaire 57. Les collecteurs d'écoulement 597 et 598 sont séparés des collecteurs 591, 592, 595 et 596 par le joint 518.

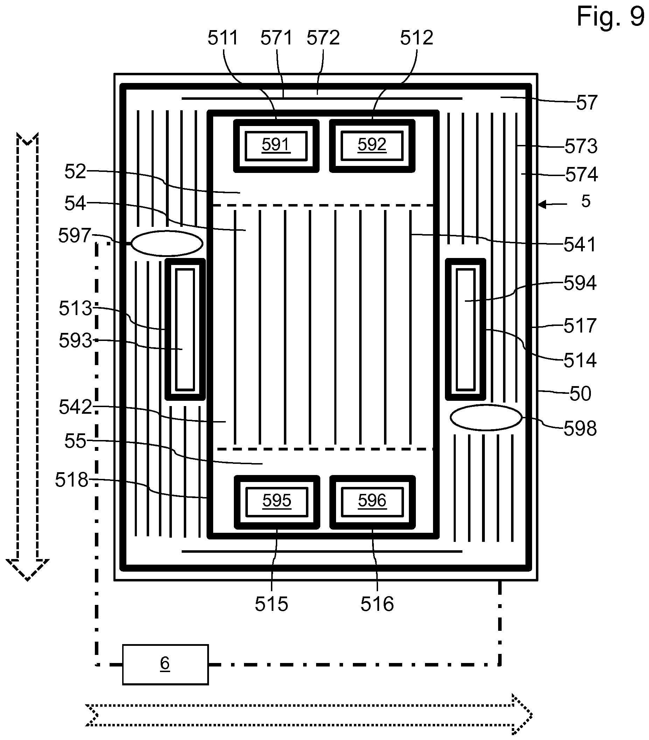

La figure 9 est une vue d'une face anodique d'une autre variante de la pile à combustible 4 du premier mode de réalisation, munie de joints décrits par la suite. La pile à combustible 4 comprend une AME 110 disposée en vis-à-vis de la plaque bipolaire 5, et non illustrée sur cette figure. Les joints sont plaqués contre l'AME 110. La figure 9 illustre une face externe de la plaque bipolaire 5, destinée à guider du carburant dans une zone réactive 54 positionnée dans sa partie médiane. Du carburant est ainsi guidé dans la zone réactive 54 entre la plaque bipolaire 5 et l'AME 110, par l'intermédiaire de canaux d'écoulement 542 délimités par des parois 541. Des zones d'homogénéisation de carburant 52 et 55 sont avantageusement ménagées de part et d'autre de la zone réactive 54.

La plaque bipolaire 5 comporte des orifices ou collecteurs 591 à 596 présentant le même positionnement et la même fonction que dans l'exemple de la figure 2. Les orifices 591 à 596 sont ceinturés par des joints 511 à 516 respectivement. Les zones d'homogénéisation 52 et 55 mettent en communication le collecteur 591 avec les canaux d'écoulement 542 et le collecteur 596 avec les canaux d'écoulement 542 respectivement, de façon connue en soi.

Un joint intermédiaire 518 et un joint périphérique 517 présentent sensiblement la même configuration que dans l'exemple de la figure 2. Une zone intermédiaire 57 est ainsi délimitée entre les joints 517 et 518.

Dans cette variante, on ménage plusieurs circuits d'écoulement dans la zone intermédiaire 57. À cet effet, la pile à combustible 4 comporte un collecteur 597, positionné à proximité du collecteur 593. La pile à combustible 4 comporte également un collecteur 598 positionné à proximité du collecteur 594. Un premier circuit d'écoulement contourne ainsi les collecteurs 591 et 592 pour relier le collecteur 597 et le collecteur 598. Un deuxième circuit d'écoulement contourne les collecteurs 595 et 596 pour relier le collecteur 597 et le collecteur 598.

Les premier et deuxième circuits d'écoulement comportent ici des canaux d'écoulement 572 délimités par des parois 571 s'étendant dans le sens de la largeur de la plaque bipolaire 5. Les premier et deuxième circuits d'écoulement comportent également des canaux d'écoulement 574 délimités par des parois 573 s'étendant dans le sens de la longueur de la plaque bipolaire 5. Les canaux d'écoulement 572 et 574 permettent de favoriser un écoulement de fluide dans toute la zone intermédiaire 57, afin d'éviter que du carburant ayant fui ne s'accumule dans des zones de cette zone intermédiaire 57. Les collecteurs d'écoulement 597 et 598 sont séparés des collecteurs 591, 592, 595 et 596 par le joint 518.

Si le fluide introduit dans les circuits d'écoulement provient du collecteur de sortie 594, on peut avantageusement maintenir une bonne homogénéité de température autour du joint 518, et à un niveau relativement élevé, puisque correspondant sensiblement à la température de la zone réactive 54. Par ailleurs, on a illustré l'utilisation du liquide caloporteur. Le fluide introduit dans les circuits d'écoulement 57 peut également être de l'air, et notamment de l'air appauvri.

Une pile à combustible peut inclure des circuits d'écoulement périphériques superposés, en vue de récupérer chacun une fuite d'un fluide spécifique provenant de la zone réactive 54. Ces différents circuits d'écoulement pourront être parcourus soit par un même fluide, soit par des fluides différents. Si les circuits d'écoulement superposés sont parcourus par des fluides différents, ces différents circuits d'écoulement disposeront de collecteurs ou d'injecteurs d'entrée et de sortie respectifs.

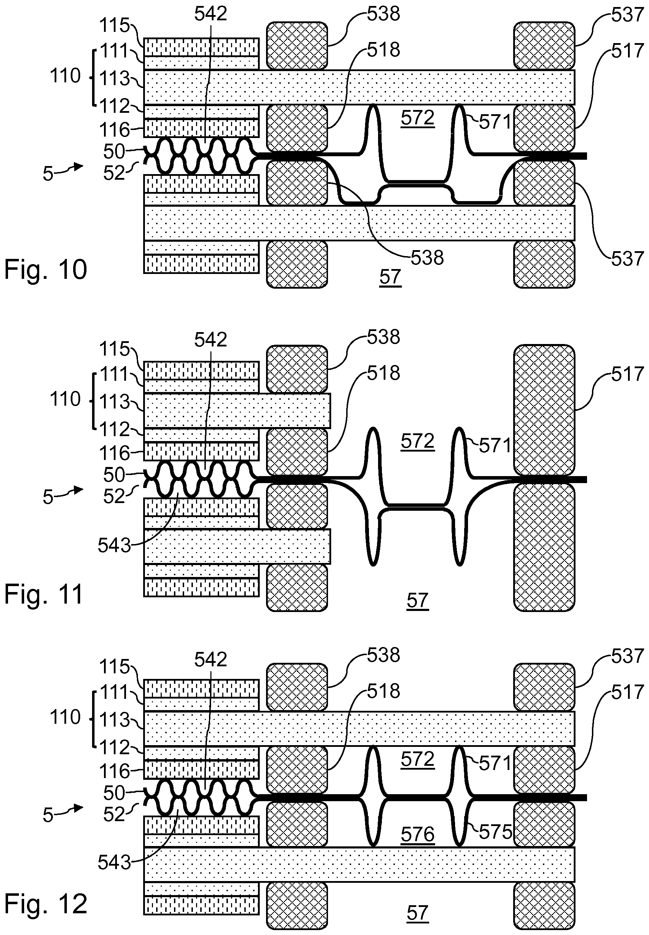

La figure 10 est une vue en coupe transversale d'une pile à combustible au niveau de la zone médiane 57. Dans cette configuration, la zone médiane 57 est destinée à récupérer uniquement des fuites provenant des canaux d'écoulement de carburant 542. Un joint périphérique 537 est positionné à la verticale du joint périphérique 517 (ou selon une autre définition, les joints périphériques 537 et 517 sont superposés selon la direction de l'empilement), sur une face externe opposée d'une plaque bipolaire 5. Les joints 517 et 537 sont séparés d'une part par une membrane 113 et par une plaque bipolaire 5 Un joint intermédiaire 538 est positionné à la verticale du joint intermédiaire 518 (ou selon une autre définition, les joints périphériques 538 et 518 sont superposés selon la direction de l'empilement), sur une face externe opposée de la plaque bipolaire 5. Les joints 518 et 538 sont séparés d'une part par une membrane 113 et par une plaque bipolaire 5. Dans la zone médiane 57, un circuit d'écoulement est défini uniquement entre les joints 517 et 518, un écoulement entre les tôles 51 et 52 et un écoulement entre les joints 537 et 538 étant bloqués.

Dans l'exemple illustré, l'assemblage membrane/électrodes 110 comporte des couches de diffusion gazeuse 115 et 116, en contact avec des plaques bipolaires 5 respectives. Dans l'exemple illustré, les plaques bipolaires 5 comprennent chacune deux tôles 50 et 52 superposées et solidaires l'une de l'autre.

La figure 11 est une variante de la configuration de la figure 10. Dans cette variante, la membrane 113 est interrompue au niveau des joints 518 et 538. Un joint 517 s'étend entre deux plaques bipolaires adjacentes. Le circuit d'écoulement ménagé dans la zone intermédiaire 57 est ici destiné à récupérer à la fois les fuites provenant des canaux d'écoulement de d'hydrogène 542, et les fuites provenant de canaux d'écoulement d'air 543.

La figure 12 est une variante de la configuration de la figure 10. Dans cette variante, des canaux d'écoulement 576 sont ménagés en vis-à-vis des canaux 572, entre une plaque bipolaire 5 est une membrane 113. Les canaux 576 sont notamment délimités par des parois 575 de la tôle 52. Les canaux d'écoulement 576 forment un circuit d'écoulement à la verticale du circuit d'écoulement formé par les canaux 572. Ce circuit d'écoulement est destiné à recevoir des fuites de comburant provenant des canaux d'écoulement 543. Ce circuit d'écoulement est relié à une pompe destinée à faire circuler un fluide, pouvant être identique à celui circulant dans les canaux d'écoulement 572. Une telle configuration peut par exemple s'avérer avantageuse lorsque le comburant est du dioxygène pur. Cette configuration permet de récupérer indépendamment des fuites de comburant et des fuites d'autres fluides pouvant provenir de la zone réactive 54.

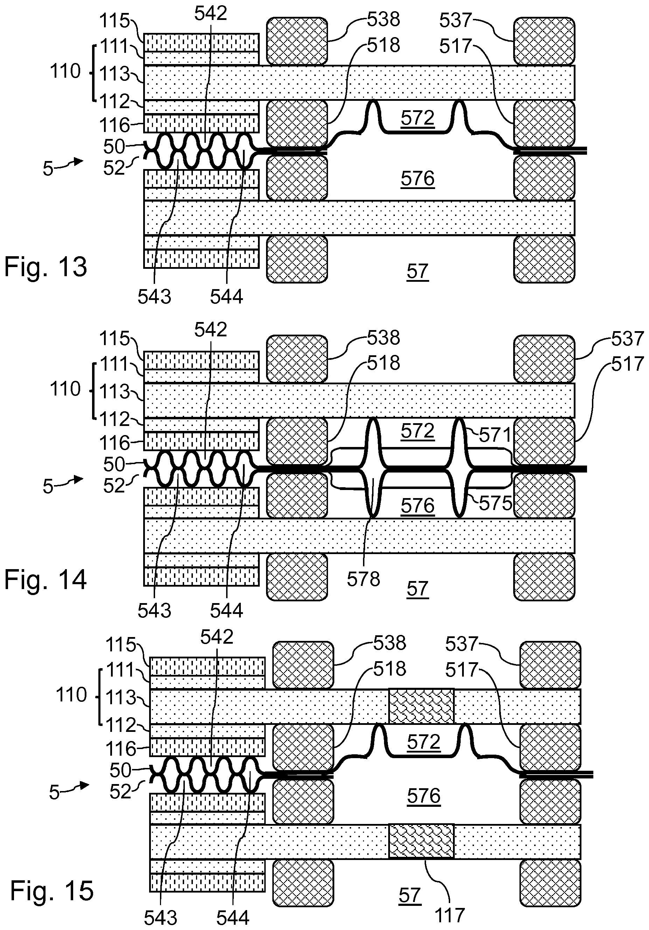

La figure 13 est une variante de la configuration de la figure 12. Dans cette variante, les canaux d'écoulement 576 sont plus profonds que les canaux d'écoulement 572. Par ailleurs, la tôle 52 s'interrompt au niveau des joints 518 et 538. Cette configuration permet de récupérer à la fois des fuites provenant des canaux d'écoulement de comburant 543, et des fuites provenant de canaux d'écoulement de fluide de refroidissement 544. Cette configuration permet de récupérer indépendamment des fuites de comburant et des fuites d'autres fluides pouvant provenir de la zone réactive 54.

La figure 14 est une variante de la configuration de la figure 12. Dans cette variante, des canaux d'écoulement 578 sont ménagés dans la zone intermédiaire 57 entre les tôles 51 et 52, pour récupérer d'éventuelles fuites de fluide de refroidissement provenant des canaux d'écoulement 544. Dans cette configuration, les fuites des différents fluides s'écoulant dans la zone réactive 54 peuvent être récupérées indépendamment.

Dans les configurations illustrées aux figures 5 et 6, on peut envisager que le circuit d'écoulement dans la zone intermédiaire 57 récupère de l'air en sortie de la zone réactive 54. Dans un tel cas, cet air sera chargé en eau liquide et/ou gazeuse. En prenant l'exemple de l'une des configurations des figures 12 à 14, on peut prévoir que la membrane soit perméable à l'eau dans la zone intermédiaire 57 de manière à séparer :
- l'écoulement dans les canaux d'écoulement 576 de comburant destiné à être introduit dans le collecteur 592 à destination de la zone réactive 54 ; et
- l'écoulement dans les canaux d'écoulement 572 de résidus de combustion provenant de la zone réactive 54 par le collecteur 595.

L'air chargé d'eau en sortie de zone réactive 54 peut ainsi servir à humidifier l'air comburant destiné à l'entrée de la zone réactive 54 sans nécessiter l'ajout d'un équipement supplémentaire en dehors de la pile.

La figure 15 illustre un exemple de mise en œuvre d'un élément ou membrane perméable 117, positionné dans la membrane 113 au niveau de la zone intermédiaire 57. D'autres configurations d'écoulement sont également envisageables, comme par exemple l'écoulement du comburant entrant dans les canaux d'écoulement 572 et l'écoulement des résidus de combustion dans les canaux d'écoulement 576. Les fluides s'écoulant dans les canaux d'écoulement 572 et 576 peuvent ainsi être différents, en utilisant par exemple des collecteurs dissociés.

L'invention peut également s'appliquer avec un circuit d'écoulement de fluide périphérique ménagé à l'intérieur de la plaque bipolaire 5 afin de récupérer et de faire circuler du fluide de refroidissement provenant d'une fuite de la zone réactive. Le circuit d'écoulement de fluide périphérique est alors ménagé entre deux tôles de la plaque bipolaire 5.

L'invention peut également s'appliquer avec un circuit d'écoulement de fluide périphérique ménagé sur une autre face externe de la plaque bipolaire 5 afin de récupérer et de faire circuler du comburant provenant d'une fuite de la zone réactive. Le circuit d'écoulement de fluide périphérique est alors ménagé entre cette autre face externe de la plaque bipolaire 5 et un autre assemblage membrane/électrodes.

L'invention a été décrite précédemment pour une pile à combustible alimentée en carburant dihydrogène. L'invention s'applique bien entendu également à des piles à combustible utilisant d'autres types de combustible, par exemple du méthanol.

Les différents joints décrits précédemment peuvent être de tous types appropriés, par exemple des joints plats, des joints toriques, des joint sérigraphiés et ou des joints positionnés sur les plaques bipolaires 5 avant l'assemblage de la pile à combustible 4.

Dans les exemples qui précèdent, l'écoulement du fluide dans la zone intermédiaire est réalisé au moyen d'une pompe 6. On peut cependant également envisager d'obtenir un tel écoulement en maintenant une pression du fluide à l'entrée de la zone intermédiaire supérieure à la pression de fluide à la sortie de cette zone intermédiaire.

## Revendications

1. Pile à combustible (4), comprenant :
- un guide d'écoulement (5) ;
- un composant (110) en vis-à-vis du guide d'écoulement, configuré pour permettre l'écoulement d'un premier fluide depuis un premier collecteur vers un deuxième collecteur et à travers une zone réactive disposée entre le guide d'écoulement et ce composant ;
- un joint périphérique (517) disposé entre le guide d'écoulement (5) et le composant (110) ;
- un joint intermédiaire (518) disposé entre le guide d'écoulement (5) et le composant (110), le joint intermédiaire étant ceinturé par le joint périphérique (517) et ceinturant la zone réactive (54) ;
- un autre composant en vis-à-vis du guide d'écoulement et configuré pour permettre l'écoulement d'un deuxième fluide depuis un troisième collecteur vers un quatrième collecteur et à travers une autre zone réactive entre le guide d'écoulement et cet autre composant ;
**caractérisée en ce que** :
- un circuit d'écoulement de fluide (572,574) est ménagé entre le joint intermédiaire et le joint périphérique entre des cinquième et sixième collecteurs (597,598), le cinquième ou le sixième collecteur étant séparé des premier à quatrième collecteurs par l'intermédiaire dudit joint intermédiaire (518) ;
- la pile à combustible (4) étant configurée pour entraîner un fluide entre lesdits cinquième et sixième collecteurs (597,598) dans ledit circuit d'écoulement de fluide (572,574).

2. Pile à combustible (4) selon la revendication 1, dans laquelle ledit composant est un assemblage membrane/électrodes (110) ou un autre guide d'écoulement (5).

3. Pile à combustible (4) selon la revendication 2, dans laquelle ledit composant est un assemblage membrane/électrodes (110) incluant une membrane échangeuse de protons (113), la pile à combustible comprenant en outre une membrane perméable à l'eau (117) traversant ladite membrane échangeuse de protons et positionnée entre le joint intermédiaire et le joint périphérique.

4. Pile à combustible (4) selon l'une quelconque des revendications précédentes, comprenant en outre :
- un autre joint périphérique (537) disposé à la verticale du joint périphérique (517) et disposé entre le guide d'écoulement et l'autre composant ;
- un autre joint intermédiaire (538) disposé à la verticale du joint intermédiaire (518) et disposé entre le guide d'écoulement et l'autre composant, l'autre joint intermédiaire étant ceinturé par l'autre joint périphérique et ceinturant la zone réactive ;
- un autre circuit d'écoulement de fluide étant ménagé entre l'autre joint intermédiaire et l'autre joint périphérique entre des septième et huitième collecteurs ;
- la pile étant configurée pour entraîner un fluide entre lesdits septième et huitième collecteurs dans ledit autre circuit d'écoulement de fluide.

5. Pile à combustible (4) selon la revendication 4, dans lequel la pile est configurée pour entraîner des fluides différents dans ledit circuit d'écoulement de fluide et dans ledit autre circuit d'écoulement de fluide.

6. Pile à combustible (4) selon l'une quelconque des revendications précédentes, dans laquelle ledit circuit d'écoulement de fluide (572,574) s'étend sur au moins 80 % de la longueur du joint intermédiaire (518).

7. Pile à combustible (4) selon l'une quelconque des revendications précédentes, dans laquelle ledit circuit d'écoulement de fluide est rempli d'air appauvri en oxygène.

8. Pile à combustible (4) selon l'une quelconque des revendications 1 à 6, dans laquelle ledit circuit d'écoulement de fluide est rempli d'air et d'eau.

9. Pile à combustible (4) selon l'une quelconque des revendications précédentes, dans laquelle ledit circuit d'écoulement de fluide est relié à un autre circuit d'écoulement traversant la zone réactive (54).

10. Pile à combustible (4) selon l'une quelconque des revendications précédentes, dans laquelle ledit circuit d'écoulement de fluide comprend deux zones d'écoulement dissociées mettant en communication des collecteurs distincts.

11. Pile à combustible selon l'une quelconque des revendications précédentes, comprenant en outre une pompe (6) configurée pour entrainer un fluide entre lesdits cinquième et sixième collecteurs (597,598) dans ledit circuit d'écoulement de fluide (572,574).

## Patentansprüche

1. Brennstoffzelle (4), welche umfasst:
- eine Strömungsführung (5);
- eine Komponente (110) gegenüber der Strömungsführung, die dafür ausgelegt ist, das Strömen eines ersten Fluids von einem ersten Kollektor zu einem zweiten Kollektor und durch eine reaktive Zone hindurch, die zwischen der Strömungsführung und dieser Komponente angeordnet ist, zu ermöglichen;
- eine Umfangsdichtung (517), die zwischen der Strömungsführung (5) und der Komponente (110) angeordnet ist;
- eine Zwischendichtung (518), die zwischen der Strömungsführung (5) und der Komponente (110) angeordnet ist, wobei die Zwischendichtung von der Umfangsdichtung (517) umgeben ist und die reaktive Zone (54) umgibt;
- eine weitere Komponente gegenüber der Strömungsführung, die dafür ausgelegt ist, das Strömen eines zweiten Fluids von einem dritten Kollektor zu einem vierten Kollektor und durch eine weitere reaktive Zone zwischen der Strömungsführung und dieser weiteren Komponente hindurch zu ermöglichen; **dadurch gekennzeichnet, dass**:
- ein Fluidströmungskreislauf (572, 574) zwischen der Zwischendichtung und der Umfangsdichtung zwischen einem fünften und einem sechsten Kollektor (597, 598) ausgebildet ist, wobei der fünfte oder der sechste Kollektor von dem ersten bis vierten Kollektor durch die Zwischendichtung (518) getrennt ist;
- wobei die Brennstoffzelle (4) dafür ausgelegt ist, ein Fluid zwischen dem fünften und sechsten Kollektor (597, 598) in den Fluidströmungskreislauf (572, 574) zu fördern.

2. Brennstoffzelle (4) nach Anspruch 1, wobei die Komponente eine Membran/Elektroden Einheit (110) oder eine weitere Strömungsführung (5) ist.

3. Brennstoffzelle (4) nach Anspruch 2, wobei die Komponente eine Membran/Elektroden Einheit (110) ist, die eine Polymerelektrolytmembran (113) aufweist, wobei die Brennstoffzelle außerdem eine wasserdurchlässige Membran (117) umfasst, welche die Polymerelektrolytmembran durchquert und zwischen der Zwischendichtung und der Umfangsdichtung positioniert ist.

4. Brennstoffzelle (4) nach einem der vorhergehenden Ansprüche, welche außerdem umfasst:
- eine weitere Umfangsdichtung (537), die senkrecht zu der Umfangsdichtung (517) angeordnet ist und zwischen der Strömungsführung und der weiteren Komponente angeordnet ist;
- eine weitere Zwischendichtung (538), die senkrecht zu der Zwischendichtung (518) angeordnet ist und zwischen der Strömungsführung und der weiteren Komponente angeordnet ist, wobei die weitere Zwischendichtung von der weiteren Umfangsdichtung umgeben ist und die reaktive Zone umgibt;
- einen weiteren Fluidströmungskreislauf, der zwischen der weiteren Zwischendichtung und der weiteren Umfangsdichtung zwischen einem siebenten und einem achten Kollektor ausgebildet ist;
- wobei die Zelle dafür ausgelegt ist, ein Fluid zwischen dem siebenten und achten Kollektor in den weiteren Fluidströmungskreislauf zu fördern.

5. Brennstoffzelle (4) nach Anspruch 4, wobei die Zelle dafür ausgelegt ist, unterschiedliche Fluide in den Fluidströmungskreislauf und in den weiteren Fluidströmungskreislauf zu fördern.

6. Brennstoffzelle (4) nach einem der vorhergehenden Ansprüche, wobei sich der Fluidströmungskreislauf (572, 574) über wenigstens 80 % der Länge der Zwischendichtung (518) erstreckt.

7. Brennstoffzelle (4) nach einem der vorhergehenden Ansprüche, wobei der Fluidströmungskreislauf mit Luft gefüllt ist, die an Sauerstoff abgereichert ist.

8. Brennstoffzelle (4) nach einem der Ansprüche 1 bis 6, wobei der Fluidströmungskreislauf mit Luft und mit Wasser gefüllt ist.

9. Brennstoffzelle (4) nach einem der vorhergehenden Ansprüche, wobei der Fluidströmungskreislauf mit einem weiteren Strömungskreislauf verbunden ist, der die reaktive Zone (54) durchquert.

10. Brennstoffzelle (4) nach einem der vorhergehenden Ansprüche, wobei der Fluidströmungskreislauf zwei getrennte Strömungsbereiche umfasst, die eine Verbindung zwischen unterschiedlichen Kollektoren herstellen.

11. Brennstoffzelle nach einem der vorhergehenden Ansprüche, welche außerdem eine Pumpe (6) umfasst, die dafür ausgelegt ist, ein Fluid zwischen dem fünften und dem sechsten Kollektor (597, 598) in den Fluidströmungskreislauf (572, 574) zu fördern.

## Claims

1. Fuel cell (4), comprising:
- a flow guide (5);
- a component (110) opposite the flow guide, configured to allow a first fluid to flow from a first manifold to a second manifold and through a reactive zone disposed between the flow guide and said component;
- a peripheral seal (517) disposed between the flow guide (5) and the component (110);
- an intermediate seal (518) disposed between the flow guide (5) and the component (110), the intermediate seal being encircled by the peripheral seal (517) and encircling the reactive zone (54);
- another component opposite the flow guide and configured to allow a second fluid to flow from a third manifold to a fourth manifold and through another reactive zone between the flow guide and said other component;
**characterized in that**:
- a fluid flow circuit (572, 574) is provided between the intermediate seal and the peripheral seal between fifth and sixth manifolds (597, 598), the fifth or the sixth manifold being separated from the first to fourth manifolds by means of said intermediate seal (518);
- the fuel cell (4) being configured to convey a fluid between said fifth and sixth manifolds (597, 598) in said fluid flow circuit (572, 574).

2. Fuel cell (4) according to Claim 1, wherein said component is a membrane/electrode assembly (110) or another flow guide (5).

3. Fuel cell (4) according to Claim 2, wherein said component is a membrane/electrode assembly (110) including a proton-exchange membrane (113), the fuel cell further comprising a water permeable membrane (117) traversing said proton-exchange membrane and positioned between the intermediate seal and the peripheral seal.

4. Fuel cell (4) according to any of the preceding claims, further comprising:
- another peripheral seal (537) disposed vertically relative to the peripheral seal (517) and disposed between the flow guide and the other component;
- another intermediate seal (538) disposed vertically relative to the intermediate seal (518) and disposed between the flow guide and the other component, the other intermediate seal being encircled by the other peripheral seal and encircling the reactive zone;
- another fluid flow circuit being provided between the other intermediate seal and the other peripheral seal between seventh and eighth manifolds;
- the cell being configured to convey a fluid between said seventh and eighth manifolds in said other fluid flow circuit.

5. Fuel cell (4) according to Claim 4, wherein the cell is configured to convey different fluids in said fluid flow circuit and in said other fluid flow circuit.

6. Fuel cell (4) according to any of the preceding claims, wherein said fluid flow circuit (572, 574) extends on at least 80 % of the length of the intermediate seal (518).

7. Fuel cell (4) according to any of the preceding claims, wherein said fluid flow circuit is filled with oxygen depleted air.

8. Fuel cell (4) according to any of Claims 1 to 6, wherein said fluid flow circuit is filled with air and water.

9. Fuel cell (4) according to any of the preceding claims, wherein said fluid flow circuit is connected to another flow circuit traversing the reactive zone (54).

10. Fuel cell (4) according to any of the preceding claims, wherein said fluid flow circuit comprises two separate flow zones connecting distinct manifolds.

11. Fuel cell according to any of the preceding claims, further comprising a pump (6) configured to convey a fluid between said fifth and sixth manifolds (597, 598) in said fluid flow circuit (572, 574).
